# EUROPÄISCHE PATENTSCHRIFT

(11) **EP 3 517 399 B1**
(45) Veröffentlichungstag und Bekanntmachung des Hinweises auf die Patenterteilung: **01.09.2021**
(21) Anmeldenummer: 19154129.1
(22) Anmeldetag: 29.01.2019
(51) Int. Cl.: B62B 3/02, B62B 3/16, B62B 5/04

(54) **BRIEFBEHÄLTERROLLWAGEN**
LETTER CONTAINER TROLLEY
CHARIOT ROULANT À CONTENANT À COURRIER

(30) Priorität: 29.01.2018 AT 5001618 U
(43) Veröffentlichungstag der Anmeldung: 31.07.2019
(73) Patentinhaber: Österreichische Post AG, 1030 Wien (AT)
(72) Erfinder: FRANK, Peter, 1030 Wien (AT)
(74) Vertreter: SONN Patentanwälte OG

(56) Entgegenhaltungen:
- WO-A2-2006/050390
- BE-A- 520 128
- DE-A1-102014 013 896
- DE-U1-202006 007 373
- FR-A1- 2 521 425
- US-A- 2 726 095
- US-A- 3 698 733

## Beschreibung

Die vorliegende Erfindung betrifft allgemein einen Briefbehälterrollwagen mit einem Fahrgestell, an dem Rollen angebracht sind, und mit einem Aufbau, welcher zwei Stirnwände aufweist, wobei die Stirnwände jeweils zwischen einer hochgeklappten Gebrauchsstellung und einer eingeklappten Wartestellung umklappbar sind.

Weiters bezieht sich die Erfindung auf eine Anordnung mit zumindest zwei derartigen Briefbehälterrollwagen.

Ein Briefbehälterrollwagen ist aus EP 1 884 438 B1 bekannt. Mit Hilfe eines solchen Briefbehälterrollwagens können Briefbehälter, insbesondere in gestapelter Anordnung, transportiert werden. Der bekannte Briefbehälterrollwagen weist gegenüberliegende Stirnwände quer zur Fahrtrichtung auf. Die Stirnwände sind unbeweglich am Aufbau angeordnet. Weiters sind zwei Seitenwände an den Längsseiten des Rollwagens vorgesehen. Um das Beladen und Entladen der Briefbehälter zu erleichtern, weist die bekannte Ausführung eine Ladeklappe an der Seitenwand auf. Die Ladeöffnung kann durch Lösen von Verriegelungselementen in Form von federbeaufschlagten Dornen freigegeben werden.

Nachteilig ist jedoch der hohe Platzbedarf für Leerlagerung und Leertransport der bekannten Briefbehälterrollwagen.

Die WO 2006/050390 A2 betrifft einen Palettenwagen mit einklappbaren Seitenwänden. Diese Palettenwagen können gestapelt und dabei gegen ein Verrutschen gesichert werden.

Die FR 2 521 425 A1 offenbart einen Servicewagen für den Einsatz in Operationsräumen mit einklappbaren Seitenwänden.

US 3 698 733 A zeigt einen Rollwagen mit einklappbaren Endrahmen. Die Rollwagen können übereinander gestapelt werden.

Demnach besteht die Aufgabe der vorliegenden Erfindung darin, die Nachteile des Standes der Technik zu lindern bzw. zu beheben. Die Erfindung setzt sich insbesondere zum Ziel einen Briefbehälterrollwagen zu schaffen, welcher platzsparend gelagert und transportiert werden kann.

Diese Aufgabe wird durch einen Briefbehälterrollwagen mit den Merkmalen von Anspruch 1 gelöst. Bevorzugte Ausführungsformen sind in den abhängigen Ansprüchen angegeben.

Beim erfindungsgemäßen Briefbehälterrollwagen sind die Stirnwände jeweils zwischen einer hochgeklappten Gebrauchsstellung und einer eingeklappten Wartestellung umklappbar. Die Stirnwände sind bevorzugt im Wesentlichen senkrecht zur Fahrtrichtung (bezogen auf die Geradeausfahrt) angeordnet. In der Gebrauchsstellung bilden die hochgeklappten Stirnwände Begrenzungen des Aufnahmeraumes, um die zu transportierenden Briefbehälter gegen Verrutschen oder Herunterfallen der Briefbehälter, insbesondere in Fahrtrichtung, zu sichern. Im entladenen Zustand des Briefbehälterrollwagens können zunächst die Stirnwände jeweils in die Wartestellung eingeklappt werden, um danach zumindest zwei Briefbehälterrollwagen kompakt und somit platzsparend aufeinander zu stapeln. Dadurch kann einerseits der Platzbedarf für die Lagerung mehrerer Briefbehälterrollwagen reduziert werden. Andererseits können mehrere Briefbehälterrollwagen im gestapelten Zustand zusammen geschleppt werden.

In der eingeklappten Wartestellung ist es günstig, wenn die Stirnwände im Wesentlichen in horizontaler Lage übereinander angeordnet sind. Um eine möglichst kompakte Anordnung des Briefbehälterrollwagens in seiner Wartestellung zu erreichen, wird beim Wechsel zwischen Gebrauchsstellung und Wartestellung zuerst die erste Stirnwand um vorzugsweise im Wesentlichen 90° eingeklappt. Anschließend wird die zweite Stirnwand, vorzugsweise ebenfalls um im Wesentlichen 90°, eingeklappt. In der Wartestellung ist daher die erste Stirnwand unterhalb der zweiten Stirnwand angeordnet.

Für die Zwecke dieser Offenbarung beziehen sich die Orts- und Richtungsangaben, wie "übereinander", "oben", "unten", etc., auf den bestimmungsgemäßen Gebrauchszustand des Briefbehälterrollwagens, bei welchem die Rollen auf einem Boden abrollen.

Erfindungsgemäß weist die in der Wartestellung obere Stirnwand zumindest eine Einbuchtung, vorzugsweise zwei Einbuchtungen, zur Aufnahme zumindest einer Rolle, vorzugsweise zweier Rollen, eines darüber gestapelten Briefbehälterrollwagens auf. Durch die Einbuchtung an der Außenseite der Stirnwand (d.h. an der vom Aufnahmeraum abgewandten Seite der Stirnwand) können zwei Briefbehälterrollwagen im gestapelten Zustand gegen Verrutschen, vorzugsweise in Längs- und in Querrichtung, gesichert werden. Bevorzugt sind zwei Einbuchtungen in Abstand senkrecht zur Fahrtrichtung angeordnet, um zwei Rollen (Räder) des darüber liegenden Rollwagens aufzunehmen. Vorzugsweise sind die Briefbehälterrollwägen im gestapelten Zustand im Wesentlichen deckungsgleich übereinander angeordnet.

Vorzugsweise ist an der Außenseite der Stirnwand zudem zumindest ein Führungselement, vorzugsweise zwei Führungselemente, zur Aufnahme und Führung einer Rolle, vorzugsweise zweier Rollen, vorgesehen. Das Führungselement ist dazu eingerichtet, die Rolle beim Stapeln der Briefbehälterrollwagen entlang des Führungselements zur Einbuchtung zu führen.

Weiters hat sich als vorteilhaft herausgestellt, wenn die in der Wartestellung obere Stirnwand zumindest eine Vertiefung zur Längssicherung zumindest einer Rolle, vorzugsweise zweier Rollen, eines darüber gestapelten Briefbehälterrollwagens aufweist. Dadurch ist der auf einem darunter angeordneten Briefbehälterrollwagen aufgesetzte obere Briefbehälterrollwagen sowohl in Längsrichtung als auch quer zur Längsrichtung gegen Verrutschen gesichert.

Eine besonders vorteilhafte Ausführungsform des erfindungsgemäßen Briefbehälterrollwagen sieht eine Langlochführung für einen Gelenkstift zwischen einer der Stirnwände und dem Fahrgestell vor. Damit kann das Umklappen der (bezogen auf die Wartestellung) oberen Stirnwand auf die (bezogen auf die Wartestellung) untere Stirnwand freigestellt werden.

Bevorzugt weist die in der Wartestellung obere Stirnwand an gegenüberliegenden Seiten je eine Langlochführung für je einen Gelenkstift am Fahrgestell auf.

Gemäß einer bevorzugten Ausführungsvariante weist die in der Wartestellung untere Stirnwand einen unteren Teil und einen oberen Teil auf, welche ineinander verschiebbar sind. In seiner ausgezogenen Endposition in der Gebrauchsstellung vergrößert das obere Teil die Gesamthöhe der Stirnwand, was den Vorteil mit sich bringt, dass die Briefbehälter in der vorgegebenen Höhe innerhalb des Aufnahmebereichs zwischen den Stirnwänden gestapelt werden können. Um von der Gebrauchsstellung in die Wartestellung wechseln zu können, kann das obere Teil der in der Wartestellung untere Stirnwand in seine eingefahrene Endposition geschoben werden. Somit ist die (bezogen auf die Wartestellung) untere Stirnwand bei dieser Ausführungsform teleskopierbar ausgebildet.

Zur Fixierung der Stirnwände in der hochgeklappten Gebrauchsstellung ist bevorzugt je eine Arretiervorrichtung zur Arretierung der Stirnwände vorgesehen. Die Arretiervorrichtungen ermöglichen werkzeuglos lösbare Schwenkverbindungen zwischen den Stirnwänden und dem Fahrgestell. In der Gebrauchsstellung sind die Stirnwände vorzugsweise im Wesentlichen senkrecht zur Hauptebene des Fahrgestells (d.h. im Wesentlichen vertikal) angeordnet. In der Wartestellung sind die Stirnwände vorzugsweise im Wesentlichen parallel zur Hauptebene des Fahrgestells (d.h. im Wesentlichen horizontal) angeordnet.

Bei einer besonders bevorzugten Ausführungsform ist die Arretiervorrichtung zur Arretierung der unteren Stirnwand in der hochgeklappten Gebrauchsstellung zudem zur Arretierung der oberen Stirnwand in der eingeklappten Wartestellung eingerichtet. Somit wird eine konstruktiv besonders einfache Ausführung geschaffen, da dieselbe Arretiervorrichtung für zwei Funktionen, nämlich das Arretieren der unteren Stirnwand in der hochgeklappten Gebrauchsstellung und das Arretieren der oberen Stirnwand in der eingeklappten Wartestellung, eingerichtet ist. Die untere Stirnwand kann in der Wartestellung zwischen Fahrgestell und oberer Stirnwand fixiert sein. Beim Stapeln zweier sich in der Wartestellung befindlicher Briefbehälterrollwägen wird somit sichergestellt, dass auch bei eventuell vorkommenden Schwenkbewegungen beim Hinaufheben und Herunterheben einzelner Briefbehälterrollwägen die Stirnwände fest mit dem Fahrgestell verbunden sind und nicht ungewollt ausklappen können, was sonst zu Verletzungen der Bedienperson oder Beschädigung des Briefbehälterrollwagens führen könnte.

Für eine einfache Handhabung weist die Arretiervorrichtung bevorzugt einen Riegel auf, welcher zwischen einer verriegelten Stellung und einer Freigabestellung, vorzugsweise im Wesentlichen in horizontaler Richtung, verschiebbar ausgestaltet ist. In der verriegelten Stellung greift der Riegel bevorzugt in eine Riegelöffnung ein, welche sich bevorzugt an der jeweiligen Stirnwand befindet. Somit kann nur durch bewusstes Verriegeln oder Entriegeln ein Stellungswechsel von der Wartestellung in die Gebrauchsstellung oder von der Gebrauchsstellung in die Wartestellung vollzogen werden.

Die Arretiervorrichtung weist bevorzugt ein Betätigungselement für den Riegel auf, wobei das Betätigungselement zwischen einer den Riegel in der verriegelten Stellung fixierenden ersten Position und einer den Riegel in der Freigabestellung fixierenden zweiten Position überführbar ausgebildet ist. Das Betätigungselement ermöglicht eine einfache manuelle Bedienung des Umklappmechanismus.

In einer bevorzugten Ausführungsvariante weist das Betätigungselement eine Aufstandsfläche zur Fußbetätigung der Arretiervorrichtung auf. Das ermöglicht der Bedienperson einerseits eine bessere Kraftübertragung, beim Tragen von Sicherheitsschuhen minimales Verletzungsrisiko sowie eine Entlastung der Wirbelsäule, da im Gegensatz zur Betätigung mit den Händen, kein Hinunterbeugen notwendig ist. Bei dieser Ausführung befindet sich das Betätigungselement bevorzugt am Fahrgestell, benachbart der Rollen.

Die Arretiervorrichtung weist bevorzugt ein Halteelement zur Fixierung des Betätigungselements in der ersten bzw. in der zweiten Position auf. Mit der Hilfe des Halteelements wird verhindert, dass es im Betrieb zu einem unerwünschten Wechsel zwischen der ersten und zweiten Position kommt.

Bei einer bevorzugten Ausführungsform ist das Betätigungselement in der ersten Position in einer ersten Winkelstellung und in der zweiten Position in einer zweiten Winkelstellung bezüglich der Vertikalen angeordnet. Die Winkelstellungen sind bevorzugt symmetrisch bezüglich einer vertikalen Mittelebene ausgebildet, so dass der Wechsel zwischen erster und zweiter Position durch entsprechende Druckbetätigungen mit dem Fuß durchgeführt werden kann.

Die Arretiervorrichtung weist bevorzugt eine Feder auf, wobei das Betätigungselement gegen die Kraft der Feder aus der Fixierung durch das Halteelement in der ersten bzw. in der zweiten Position lösbar ausgestaltet ist. Nach einem Wechsel von beispielsweise der ersten Position in die zweite Position durch vorübergehende Druckausübung auf das Betätigungselement drückt die Feder das Betätigungselement selbstständig in die zweite Position, in welcher das Betätigungselement durch das Halteelement fixiert ist. Der Wechsel von der zweiten Position in die erste Position erfolgt in die umgekehrte Richtung.

Für eine einfache Verbindung zwischen Feder und Betätigungselement weist die Feder eine die Unterkante des Betätigungselements aufnehmende Federspange auf.

Zur Mitnahme des Riegels bei einem Wechsel zwischen verriegelter und entriegelter Position weist das Betätigungselement bevorzugt eine Durchtrittsöffnung zum Durchtritt des Riegels auf.

Wenn der Riegel in vertikaler Richtung starr gelagert ist, benötigt das Betätigungselement bei der Betätigung ein ausreichendes Spiel in Richtung der Druckbetätigung. Zur Freistellung der Druckbetätigung des Betätigungselements beim Wechsel zwischen erster und zweiter Position ist die Längserstreckung der Durchtrittsöffnung bevorzugt größer als der Durchmesser des darin aufgenommenen Abschnitts des Riegels.

Als Begrenzung für das Betätigungselement weist die Arretiervorrichtung bevorzugt eine Halterung mit zumindest einer Aufnahmeöffnung für einen unteren Randbereich des Betätigungselements auf.

Hinsichtlich einer leichten, kompakten und fertigungstechnisch günstigen Konstruktion ist das Betätigungselement vorzugsweise plattenförmig ausgebildet.

Die Arretiervorrichtung weist bevorzugt eine Längsaufnahme zur im Wesentlichen passgenauen Aufnahme eines Längsrahmenelements der jeweiligen Stirnwand in der hochgeklappten Gebrauchsstellung auf. Durch das Betätigen des Betätigungselements wird der Riegel durch eine Öffnung des Längsrahmenelements geschoben um somit die jeweilige Stirnwand wahlweise arretieren oder lösen zu können.

Vorzugsweise sind zwei Arretiervorrichtungen pro Stirnwand vorgesehen, wobei die Arretiervorrichtungen bevorzugt jeweils mit einem Längsrahmenelement der Stirnwand an gegenüberliegenden Längsseiten der Stirnwand zusammenwirken. Bei dieser Ausführungsform müssen zwei Arretiervorrichtungen gelöst werden, bevor die zugehörige Stirnwand eingeklappt werden kann. Damit wird die Sicherheit des Klappmechanismus erhöht.

Gegen ein Davonrollen auf Untergrund mit Gefälle und Wegrollen beim Beladen und Entladen des Briefbehälterrollwagens ist bevorzugt eine Feststellbremse zum Abheben zweier Rollen, insbesondere zweier Lenkrollen, des Fahrgestells von einem Untergrund vorgesehen. Die Feststellbremse wird bevorzugt durch einen Fußhebel betätigt und kann durch eine Spiralfeder unterstützt wieder gelöst werden. Bei der Betätigung des Fußhebels, wird ein L-förmiger Stützwinkel in Richtung Untergrund gedrückt und hebt so die beiden Lenkrollen vom Untergrund ab. Am mit dem Untergrund im Kontakt stehenden Ende der L-förmigen Stützwinkel befinden sich aufgeschobene Aufsteckkappen welche beispielsweise aus einer Art Gummi bestehen. Die Aufsteckkappen bieten aufgrund ihrer Materialeigenschaften erhöhte Reibung und erleichtert so den Hebevorgang beim Betätigen der Feststellbremse.

In einer bevorzugten Ausführungsvariante weist die Feststellbremse einen Kniehebel auf. Bevorzugt bewirkt der Kniehebel eine Kraftübertragung auf einen insbesondere verschwenkbar am Fahrgestell angebrachten Stützwinkel, mit welchem im betätigten Zustand der Feststellbremse die Rolle vom Boden abgehoben wird. Bevorzugt weist die Feststellbremse einen vom Benutzer bedienbaren Bremsbetätigungshebel auf, welcher verschwenkbar am Fahrgestell gelagert ist. Weiters ist bevorzugt zwischen dem Bremsbetätigungshebel und dem Stützwinkel eine Hebelstange angeordnet, welche am einen Ende gelenkig mit einem Abschnitt des Bremsbetätigungshebels und am anderen Ende gelenkig mit einem Abschnitt des Stützwinkels verbunden ist. Bei dieser Ausführung ist der Kniehebel durch je einen Abschnitt des Bremsbetätigungshebels und der Hebelstange gebildet. Bevorzugt sind zwei Hebelstangen und zwei Stützwinkel an gegenüberliegenden Längsseiten des Fahrgestells vorgesehen, um zwei Rollen im betätigten Zustand vom Boden zu beabstanden. Vorzugsweise werden beide Stützwinkel über denselben Bremsbetätigungshebel betätigt. Diese Ausführung benötigt wenig Kraft, um das Gewicht des Briefbehälterrollwagen inklusive Beladung stemmen, und somit die Rollen vom Untergrund abheben zu können.

In einer bevorzugten Anordnung bei Lagerung oder Leertransport sind zumindest zwei Briefbehälterrollwägen in der eingeklappten Wartestellung der Stirnwände aufeinander gestapelt. Dadurch ist es möglich im Wesentlichen vier Briefbehälterrollwägen übereinander gestapelt auf im Wesentlichen dem selben Raum wie einen einzigen Briefbehälterrollwagen in seiner ausgeklappten Gebrauchsstellung zu lagern.

Die Erfindung wird nachstehend anhand eines bevorzugten Ausführungsbeispiels in den Zeichnungen weiter erläutert.
Fig. 1 zeigt einen erfindungsgemäßen Briefbehälterrollwagen in Seitenansicht mit zwei Stirnwänden in ausgeklappter Gebrauchsstellung.
Fig. 2 zeigt den Briefbehälterrollenwagen gemäß Fig. 1 in Seitenansicht mit einer der Stirnwände in eingeklappter Wartestellung.
Fig. 3 zeigt den Briefbehälterrollenwagen gemäß Fig. 1 in Seitenansicht mit beiden Stirnwänden in eingeklappter Wartestellung.
Fig. 4 zeigt eine Kombination aus vier Briefbehälterrollenwagen gemäß Fig. 1 bis 3 in einem aufeinander gestapelten Zustand.
Fig. 5 zeigt den Briefbehälterrollenwagen gemäß Fig. 1 bis 3 in einer Ansicht von unten mit beiden Stirnwänden in ausgeklappter Gebrauchsstellung.
Fig. 6 zeigt den Briefbehälterrollwagen gemäß Fig. 1 bis 5 in einem hochkant an eine Wand gestellten Zustand.
Fig. 7 zeigt eine Detailansicht einer Arretiervorrichtung mit einem Riegel zur Arretierung der Seitenwand in der hochgeschwenkten Gebrauchsstellung, wobei die Arretiervorrichtung im entriegeltem Zustand dargestellt ist.
Fig. 8A zeigt die Arretiervorrichtung gemäß Fig. 7 in Seitenansicht.
Fig. 8B, 8C, 8D zeigen einen Schnitt entlang der Linie A-A in Fig. 8A vor, während und nach dem Verriegeln der Arretiervorrichtung.
Fig. 9 zeigt eine Detailansicht einer durch eine Spiralfeder unterstützten Feststellbremse im nicht betätigten Zustand.
Fig. 10 zeigt eine Detailansicht der Feststellbremse gemäß Fig. 9 im betätigten Zustand.

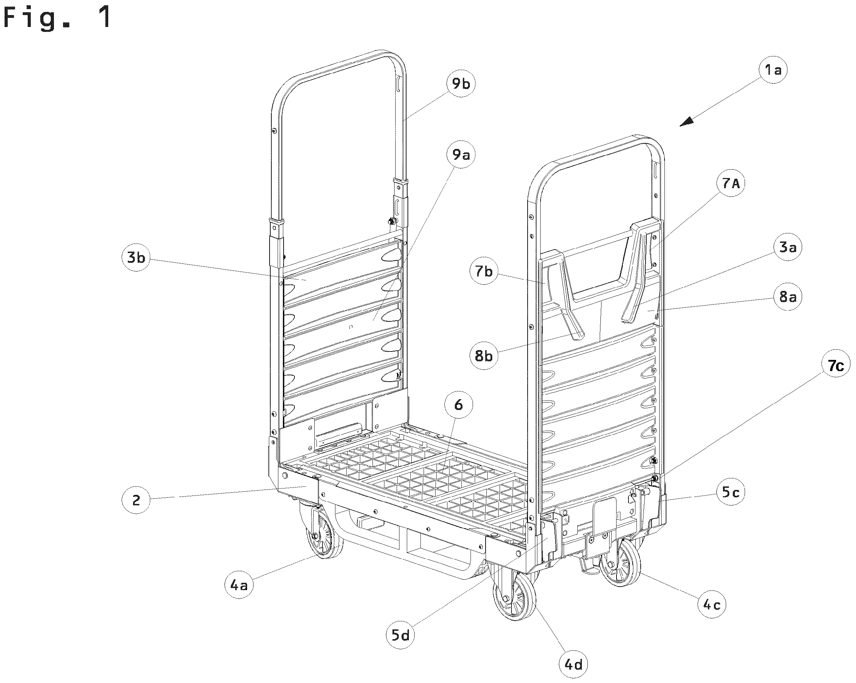

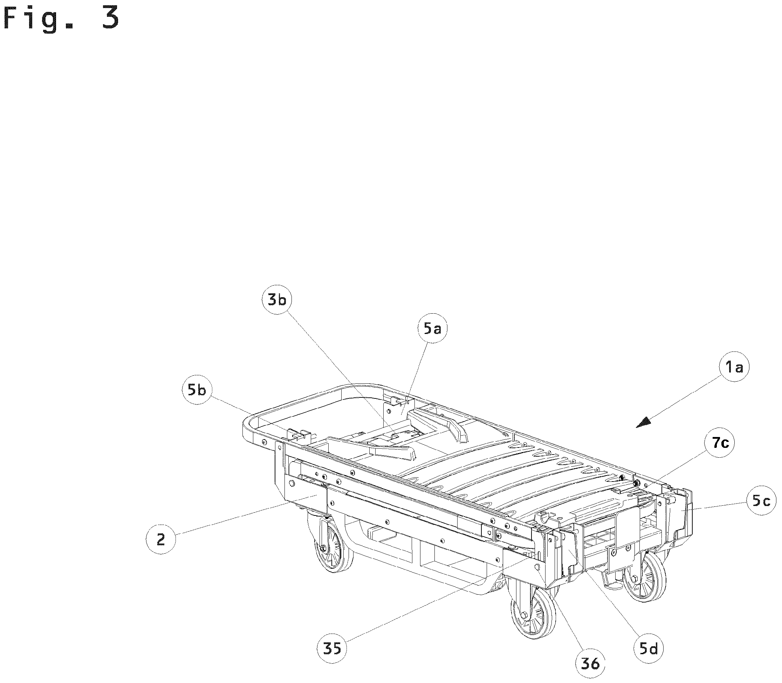

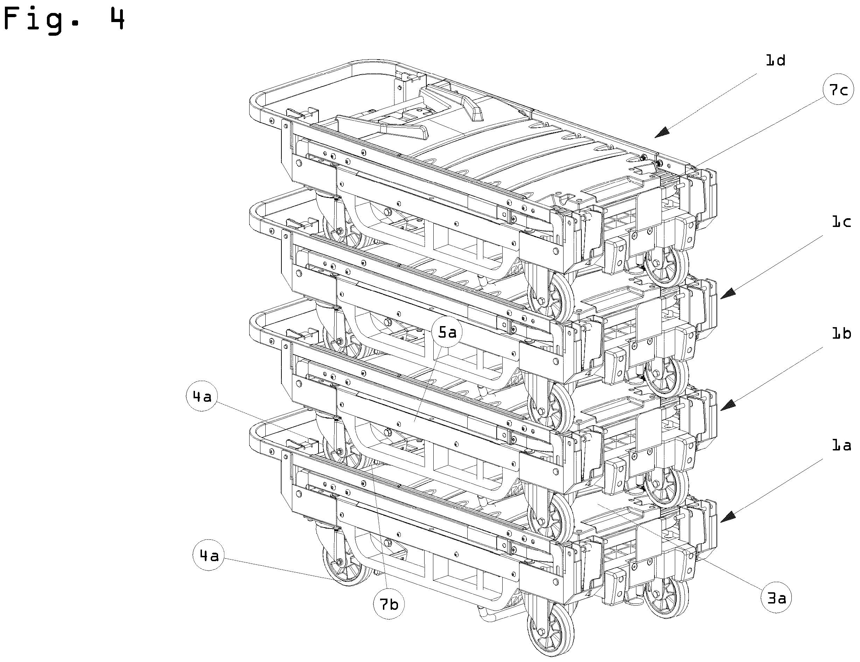

Fig. 1 zeigt einen Briefbehälterrollenwagen 1a, welcher ein Fahrgestell 2 und Stirnwände 3a, 3b aufweist. Die Stirnwände sind zwischen einer hochgeklappten Gebrauchsstellung (vgl. Fig. 1) für den Transport von (nicht gezeigten) Briefbehältern und einer umgeklappten Wartestellung (vgl. Fig. 3) für die Anordnung mehrerer Briefbehälter in einem aufeinander gestapelten Zustand (vgl. Fig. 4) überführbar. Das Fahrgestell 2 weist Rollen 4a, 4b, 4c, 4d, mindestens eine Arretiervorrichtung 5a, 5b, 5c, 5d je Stirnwand 3a, 3b und eine Basis 6 auf. Die Rollen 4a, 4b, 4c, 4d sind in der gezeigten Ausführungsform paarweise als Rollen 4c, 4d mit fixen Drehachsen und als schwenkbare Lenkrollen 4a, 4b ausgebildet. An der Außenseite der (bezogen auf die Wartestellung) oberen Stirnwand 3a sind Einbuchtungen 7a, 7b vorgesehen, in welchen Lenkrollen 4a, 4b eines darüber gestapelten Briefbehälterrollwagen 1b im Wesentlichen passgenau anordenbar sind. Darüber hinaus ist an der Außenseite der Stirnwand 3a eine Vertiefung 7c für Rollen 4c, 4d mit fixen Drehachsen des darüber gestapelten Briefbehälterrollwagens 1b vorgesehen. Die Vertiefung 7c erstreckt sich im Wesentlichen über die gesamte Breite der Stirnwand 3a. Die Stirnwand 3a weist zudem Führungselemente 8a, 8b auf, welche bis zum Ende der Einbuchtungen 7a, 7b führen.

Wie aus Fig.1 weiters ersichtlich, weist die Stirnwand 3b einen unteren Teil 9a und einen demgegenüber ausziehbaren oberen Teil 9b auf, welcher sich in Fig. 1 in seiner ausgezogenen Endposition befindet.

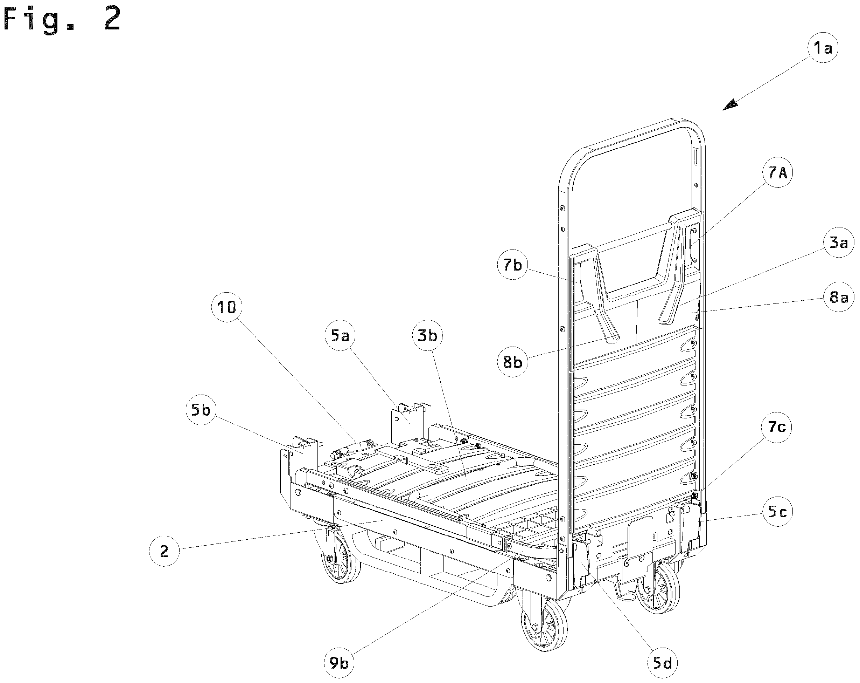

Fig. 2 zeigt den Briefbehälterrollwagen 1a mit aus den Arretiervorrichtungen 5a, 5bb gelöster Stirnwand 3b in eingeklappter Wartestellung. Der obere Teil 9b der Stirnwand 3b befindet sich in seiner eingefahrene Endposition im unteren Teil 9a, welcher von einem Scharnier 10 in Position gehalten wird.

Fig. 3 zeigt den Briefbehälterrollwagen 1a mit weiters aus den Arretiervorrichtungen 5c, 5d gelöster Stirnwand 3a in eingeklappter Wartestellung. Die gegenüberliegenden Seiten der Stirnwand 3a weisen je eine Langlochführung 35 zwischen der eingeklappten Stirnwand 3a und dem Fahrgestell 2 für je einen darin geführten Gelenkstift 36 am Fahrgestell 2 auf. Die eingeklappte Stirnwand 3a ist in ihrer Wartestellung im Wesentlichen deckungsgleich auf der eingeklappten Stirnwand 3b angeordnet und wird durch die Arretiervorrichtungen 5a, 5b im Wesentlichen parallel zum horizontalen Fahrgestell 2 gehalten.

Fig. 4 zeigt eine Anordnung aus vier übereinander angeordneten Briefbehälterrollenwagen 1a, 1b, 1c, 1d, wobei die schwenkbaren Lenkrollen 4a, 4b eines oberen Briefbehälterrollenwagens 1b, 1c, 1d jeweils in den Einbuchtungen 7a, 7b der Stirnwand 3a des unmittelbar darunter angeordneten Briefbehälterrollenwagen 1a, 1b, 1c angeordnet sind.

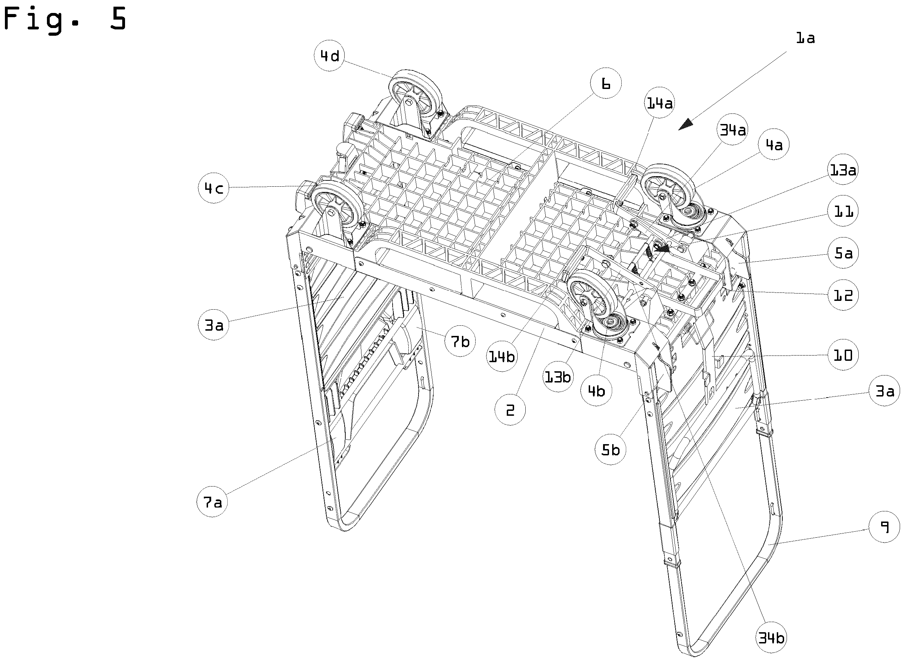

Fig. 5 zeigt den Briefbehälterrollwagen 1a mit seinem Fahrgestell 2 und die darauf montierten Rollen 4c, 4d mit fixen Drehachsen und schwenkbaren Lenkrollen 4a, 4b sowie die Basis 6 von unten. Zudem ist eine am Fahrgestell 2 montierte Feststellbremse 11 ersichtlich, welche einen Bremsbetätigungshebel 12 und Stützwinkel 13a,b mit Aufsteckkappen 14a, 14b aufweist.

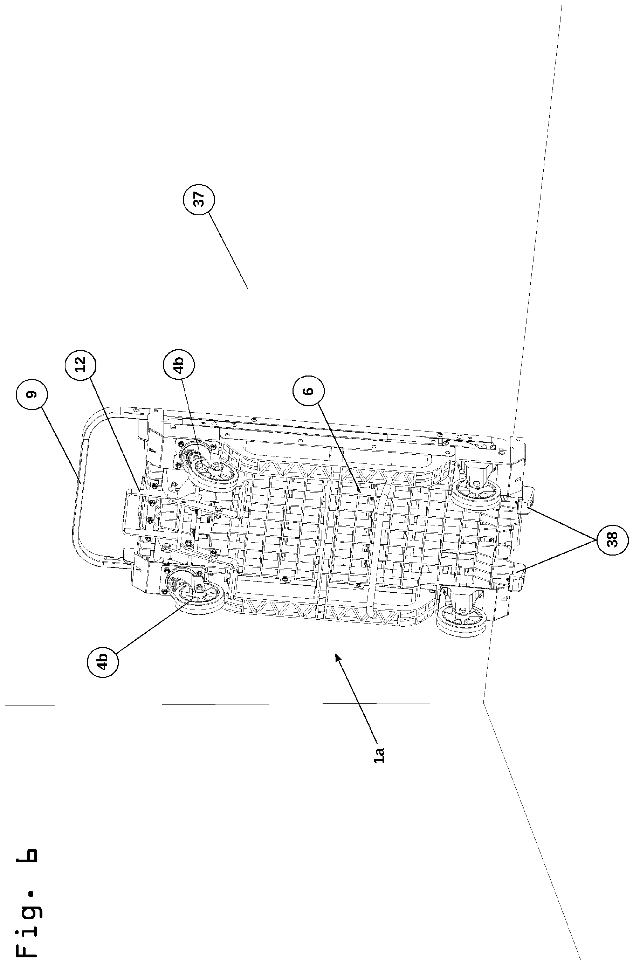

Fig. 6 zeigt den Briefbehälterrollwagen 1a mit eingeklappten Stirnwänden 3a, 3b in einem hochkant an einer Wand 37 abgestellten Zustand. Hierfür weist der Briefbehälterrollwagen 1a an einer kürzeren Seite des Fahrgestells 2 zwei Fußteile 38 auf, mit denen der Briefbehälterrollwagen 1a im hochkanten Zustand am Boden abgestützt ist.

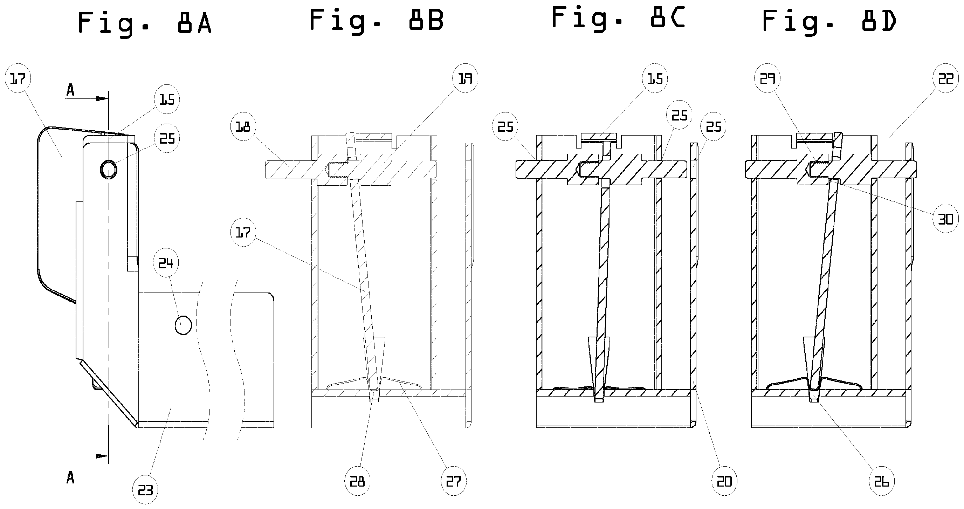

Fig. 8A zeigt eine der Arretiervorrichtungen 5a, 5b, 5c, 5d zur Arretierung der Stirnwände 3a, 3b in der hochgeklappten Gebrauchsstellung. Die Arretiervorrichtung 5 weist ein Gehäuse 20 auf, in welchem ein Riegel 16 zwischen einer verriegelten Stellung und einer Freigabestellung in horizontaler Richtung verschiebbar ist. Der Riegel 16 weist ein erstes Teil 18 mit einem Innengewinde 29 auf, in welches ein Außengewinde 30 eines zweiten Teils 19 eingeschraubt ist (vgl. Fig. 8B, 8C, 8D). Das Gehäuse 20 weist eine Längsaufnahme 22 auf, in welcher ein Längsrahmenelement 23 der jeweiligen Stirnwand 3a, 3b in der hochgeklappten Gebrauchsstellung angeordnet ist. In der verriegelten Stellung tritt der Riegel 16 durch Bohrungen 25 an der Längsaufnahme 22 und entsprechende Öffnungen 24 des Längsrahmenelements 23 hindurch, so dass die Stirnwand 3a, 3b in der hochgeklappten Gebrauchsstellung fixiert ist.

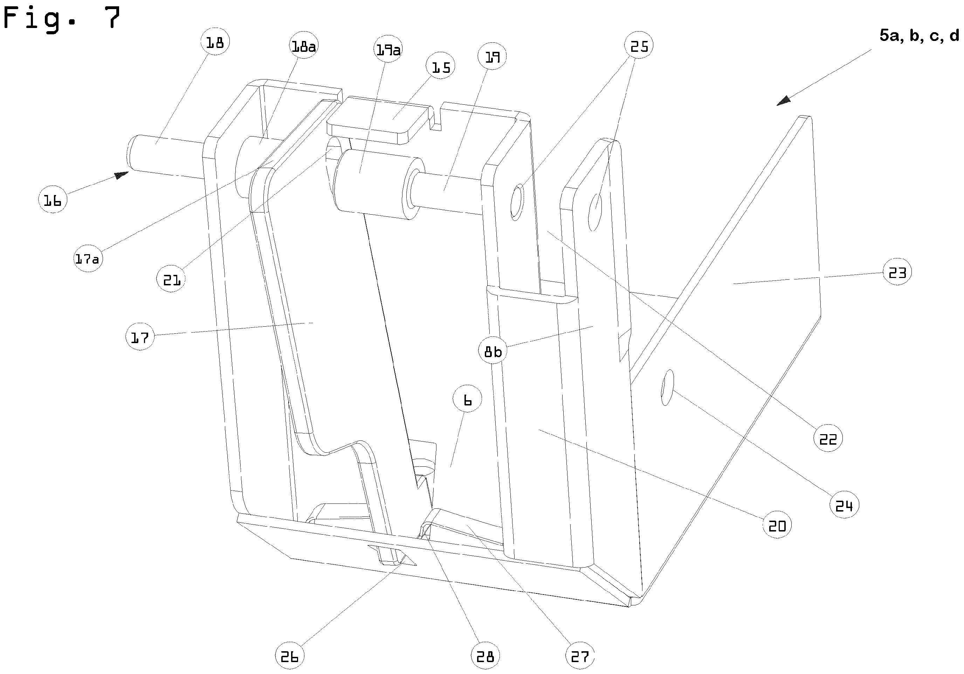

Wie aus Fig. 7, Fig. 8A weiters ersichtlich, weist die Arretiervorrichtung 5 ein Betätigungselement 17 für den Riegel 16 auf. Das Betätigungselement 17 ist derart am Gehäuse 20 der Arretiervorrichtung 5 gelagert, dass das Betätigungselement 17 vom Benutzer von einer den Riegel 16 in der verriegelten Stellung fixierenden ersten Position in eine den Riegel in der Freigabestellung fixierenden zweiten Position und umgekehrt gebracht werden kann. Das Betätigungselement 17 weist eine Aufstandsfläche 17a zur Fußbetätigung der Arretiervorrichtung 5 auf. Zudem weist das Betätigungselement 17 eine Durchtrittsöffnung 21 zum Durchtritt des Riegels 16 auf. Die Längserstreckung der Durchtrittsöffnung 21 ist größer als der Durchmesser des darin aufgenommenen Abschnitts des Riegels 16. Beidseits der Durchtrittsöffnung 21 weist der Riegel 16 je eine Verbreiterung 18a, 19b auf. Weiters ist ein Halteelement 15 zur Fixierung des Betätigungselements 17 in der ersten bzw. in der zweiten Position vorgesehen. In der gezeigten Ausführung ist das Betätigungselement 17 plattenförmig. Die Arretiervorrichtung 5 weist zudem eine Feder 27 auf. Das Betätigungselement 17 ist gegen die Kraft der Feder 27 verschieblich, um vorübergehend die Blockierung durch das Halteelement 15 in der ersten bzw. in der zweiten Position lösen zu können. In der gezeigten Ausführung weist die Feder 27 eine Federspange 28 auf, in welcher die Unterkante des Betätigungselements 17 aufgenommen ist. Das Betätigungselement 17 ist in der ersten Position in einer ersten Winkelstellung und in der zweiten Position in einer zweiten Winkelstellung bezüglich der Vertikalen angeordnet. Somit wird das Betätigungselement 17 beim Wechsel zwischen der verriegelten und der entriegelten Stellung verschwenkt.

Die Funktion der Arretiervorrichtung geht aus den Fig. 7B, 7C, 7D am besten hervor.

Wie aus Fig. 8B, 8C, 8D ersichtlich, weist der Riegel 16 ein erstes Teil 18 mit einem Innengewinde 29 auf, in welches ein Au-ßengewinde 30 eines zweiten Teils 19 eingeschraubt ist. Gemäß Fig. 8B liegt die Arretiervorrichtung 5 im entriegelten Zustand vor. Das Betätigungselement 17 ist nicht betätigt und die Feder 27 mit der Federspange 28 ist daher entspannt. Das Betätigungselmeent 27 ist zwischen Halteelement 15 und der Verbreiterung 18a des Riegels 16 fixiert. Gemäß Fig. 8C wird das Betätigungselement 17 gegen die Wirkung der Feder 27 mit der Federspange 28 betätigt. Gemäß Fig. 8D erreicht die Arretiervorrichtung 5a die verriegelte Stellung. Durch Entspannung der Feder 27 wird das Betätigungselement 17 zwischen dem Halteelement 15 und der Verbreiterung 19a fixiert.

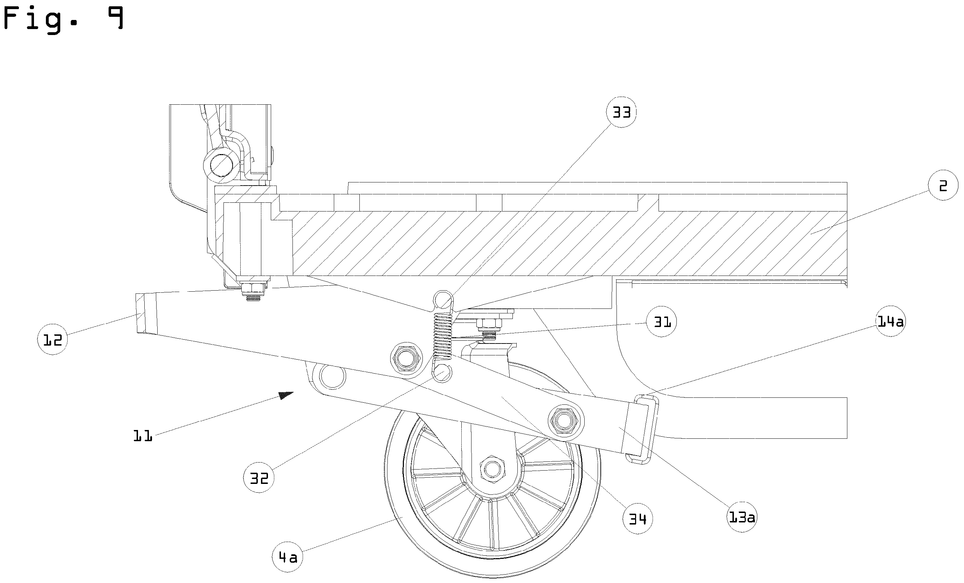

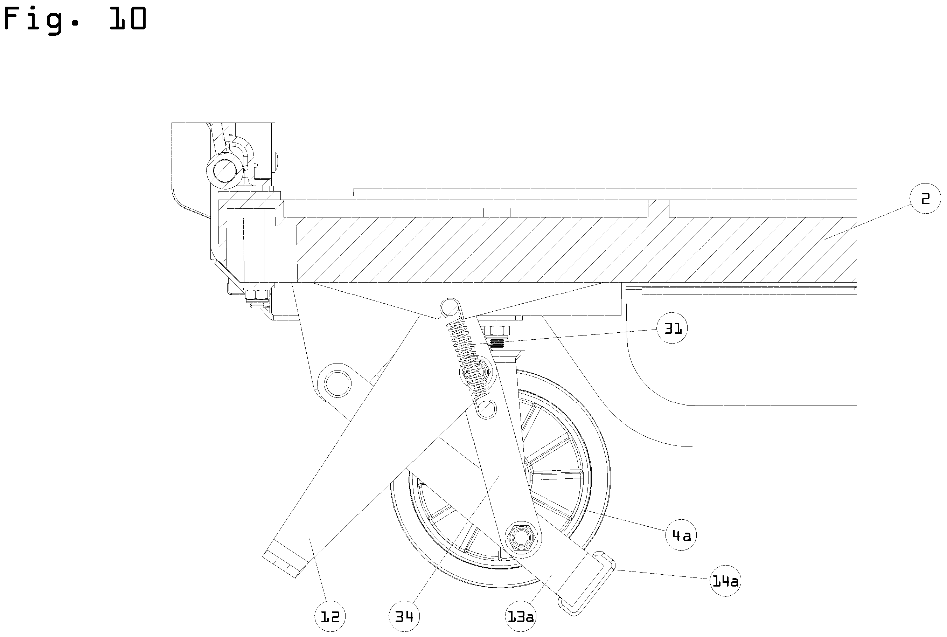

Fig. 9 zeigt die Feststellbremse 11 zum Abheben der Lenkrollen 4a, 4b von einem Untergrund im nicht betätigten Zustand. Die Feststellbremse 11 weist einen Bremsbetätigungshebel 12 auf, welcher über je eine Hebelstange 34a, 34b pro Rolle 4a, 4b mit zwei Stützwinkeln 13a, 13b zum Abheben der Rolle 4a bzw. der Rolle 4b vom Boden verbunden ist. Der Bremsbetätigungshebel 12 kann vom Benutzer in vertikaler Richtung von einer Freigabestellung in eine Feststell-Stellung nach unten gedrückt werden. Die Stützwinkel 13a, 13b weisen jeweils an ihren Enden Aufsteckkappen 14a und 14b auf. Die Hebelstangen 34a, 34b bilden mit dem Bremsbetätigungshebel 12 jeweils einen Kniehebel, mit dem der jeweilige Stützwinkel 13a, 13b betätigbar ist. An den Hebelstangen 34a, 34b ist jeweils ein Federaufnahmezapfen 32 vorgesehen, welcher durch eine Zugfeder 31 mit jeweils einem zweiten Federaufnahmezapfen 33 am Fahrgestell 2 in vertikaler Richtung miteinander verbunden ist. Im nicht betätigten Zustand der Feststellbremse 11 (vgl. Fig. 9) ist die Zugfeder 31 entgespannt. Im betätigten Zustand der Feststellbremse 11 (vgl. Fig. 10) ist die Zugfeder 31 gespannt.

Die Funktion der Feststellbremse 11 ist aus den Fig. 9 und Fig. 10 am besten ersichtlich.

Wie aus Fig. 10 ersichtlich, weisen die Lenkrollen 4a, 4b im betätigten Zustand der Feststellbremse 11 keinen Kontakt zum horizontalen Untergrund auf. Anstelle der Lenkrollen 4a, 4b sind die Stützwinkel 13a, 13b mit den an ihren Enden Aufsteckkappen 14a und 14b am horizontalen Untergrunds abgestützt. Im betätigten Zustand der Feststellbremse 11 befindet sich die Zugfeder 31 in gespannten Fixierstellung.

## Patentansprüche

1. Briefbehälterrollwagen (1) mit einem Fahrgestell (2), an dem Rollen (4) angebracht sind, und mit einem Aufbau, welcher zwei Stirnwände (3) aufweist, wobei die Stirnwände (3) jeweils zwischen einer hochgeklappten Gebrauchsstellung und einer eingeklappten Wartestellung umklappbar sind, **dadurch gekennzeichnet, dass** die in der Wartestellung obere Stirnwand (3a) an der Außenseite zumindest eine Einbuchtung (7), vorzugsweise zwei Einbuchtungen (7a,7b), zur Aufnahme zumindest einer Rolle (4), vorzugsweise zweier Rollen (4a,4b), eines darüber gestapelten Briefbehälterrollwagens (1) aufweist, so dass durch die Einbuchtung (7) an der Außenseite der oberen Stirnwand (3a) zwei Briefbehälterrollwagen (1) im gestapelten Zustand gegen Verrutschen, in Längs- und in Querrichtung, gesichert werden.

2. Briefbehälterrollwagen nach Anspruch 1, **dadurch gekennzeichnet, dass** die in der Wartestellung obere Stirnwand (3a) zumindest eine Vertiefung (7c) zur Längssicherung zumindest einer Rolle, vorzugsweise zweier Rollen (4c,4d), eines darüber gestapelten Briefbehälterrollwagens (1) aufweist.

3. Briefbehälterrollwagen (1) nach einem der Anspruch 1 oder 2, **dadurch gekennzeichnet, dass** eine Langlochführung (35) für einen Gelenkstift (36) zwischen einer der Stirnwänden (3a,3b) und dem Fahrgestell (2) vorgesehen ist, wobei bevorzugt die in der Wartestellung obere Stirnwand (3a) an gegenüberliegenden Seiten je eine Langlochführung (35) für je einen Gelenkstift (36) am Fahrgestell aufweist.

4. Briefbehälterrollwagen (1) nach einem der Ansprüche 1 bis 3, **dadurch gekennzeichnet, dass** je eine Arretiervorrichtung (5a,5b,5c,5d) zur Arretierung der Stirnwände (3a,3b) in der hochgeklappten Gebrauchsstellung vorgesehen sind, wobei die Arretiervorrichtung (5) zur Arretierung der unteren Stirnwand (3b) in der hochgeklappten Gebrauchsstellung zudem zur Arretierung der oberen Stirnwand (3a) in der eingeklappten Wartestellung eingerichtet ist.

5. Briefbehälterrollwagen (1) nach Anspruch 4, **dadurch gekennzeichnet, dass** die Arretiervorrichtung (5) einen Riegel (16) aufweist, welcher zwischen einer verriegelten Stellung und einer Freigabestellung, vorzugsweise im Wesentlichen in horizontaler Richtung, verschieblich ist, wobei die Arretiervorrichtung (5) ein Betätigungselement (17) für den Riegel (16) aufweist, wobei das Betätigungselement (17) zwischen einer den Riegel (16) in der verriegelten Stellung fixierenden ersten Position und einer den Riegel in der Freigabestellung fixierenden zweiten Position überführbar ist.

6. Briefbehälterrollwagen (1) nach Anspruch 5, **dadurch gekennzeichnet, dass** das Betätigungselement (17) eine Aufstandsfläche zur Fußbetätigung der Arretiervorrichtung aufweist.

7. Briefbehälterrollwagen (1) nach einem der Ansprüche 5 oder 6, **dadurch gekennzeichnet, dass** das Betätigungselement (17) in der ersten Position in einer ersten Winkelstellung und in der zweiten Position in einer zweiten Winkelstellung bezüglich der Vertikalen angeordnet ist.

8. Briefbehälterrollwagen (1) nach einem der Ansprüche 5 bis 7, **dadurch gekennzeichnet, dass** die Arretiervorrichtung (5) eine Feder (27) aufweist, wobei das Betätigungselement (17) gegen die Kraft der Feder (27) aus der Fixierung durch das Halteelement (15) in der ersten bzw. in der zweiten Position lösbar ist, wobei die Feder (27) bevorzugt eine die Unterkante des Betätigungselements (17) aufnehmende Federspange (28) aufweist.

9. Briefbehälterrollwagen (1) nach einem der Ansprüche 5 bis 8, **dadurch gekennzeichnet, dass** das Betätigungselement (17) eine Durchtrittsöffnung (21) zum Durchtritt des Riegels (16) aufweist, wobei die Längserstreckung der Durchtrittsöffnung (21) bevorzugt größer als der Durchmesser des darin aufgenommenen Abschnitts des Riegels (16) ist.

10. Briefbehälterrollwagen nach einem der Ansprüche 5 bis 9, **dadurch gekennzeichnet, dass** die Arretiervorrichtung (5) eine Halterung (20) mit zumindest einer Aufnahmeöffnung (26) für einen unteren Randbereich des Betätigungselements (17)aufweist.

11. Briefbehälterrollwagen nach einem der Ansprüche 5 bis 10, **dadurch gekennzeichnet, dass** das Betätigungselement (17) plattenförmig ist.

12. Briefbehälterrollwagen nach einem der Ansprüche 5 bis 11, **dadurch gekennzeichnet, dass** die Arretiervorrichtung (5) eine Längsaufnahme (22) zur im Wesentlichen passgenauen Aufnahme eines Längsrahmenelements (23) der jeweiligen Stirnwand (3) in der hochgeklappten Gebrauchsstellung aufweist.

13. Briefbehälterrollwagen nach einem der Ansprüche 1 bis 12, **dadurch gekennzeichnet, dass** eine Feststellbremse (11) zum Abheben zweier Rollen (4), insbesondere zweier Lenkrollen (4a,4b), des Fahrgestells (2) von einem Untergrund vorgesehen istwobei die Feststellbremse (11) bevorzugt einen Kniehebel aufweist.

14. Anordnung mit zumindest zwei Briefbehälterrollwagen (1) nach einem der Ansprüche 1 bis 13, wobei die zumindest zwei Briefbehälterrollwagen (1a,1b) in der eingeklappten Wartestellung der Stirnwände (3) aufeinander gestapelt sind.

## Claims

1. Letter container trolley (1) comprising a chassis (2) on which rollers (4) are attached, and a structure which has two end walls (3), the end walls (3) each being foldable between a raised position of use and a collapsed waiting position, **characterised in that** the upper end wall (3a) in the waiting position has, on the outside, at least one indentation (7), preferably two indentations (7a, 7b), for receiving at least one roller (4), preferably two rollers (4a, 4b), of a letter container trolley (1) stacked on top thereof, such that the indentation (7) on the outside of the upper end wall (3a) prevents two stacked letter container trolleys (1) from sliding in the longitudinal and transverse direction.

2. Letter container trolley according to claim 1, **characterised in that** the upper end wall (3a) in the waiting position has at least one recess (7c) for longitudinally securing at least one roller, preferably two rollers (4c, 4d), of a letter container trolley (1) stacked on top thereof.

3. Letter container trolley (1) according to either claim 1 or claim 2, **characterised in that** a slot guide (35) for a hinge pin (36) is provided between one of the end walls (3a, 3b) and the chassis (2), the upper end wall (3a) in the waiting position preferably having, on opposite sides, a slot guide (35) for a hinge pin (36) on the chassis.

4. Letter container trolley (1) according to any of claims 1 to 3, **characterised in that** a locking device (5a, 5b, 5c, 5d) is provided for locking each of the end walls (3a, 3b) in the raised position of use, the locking device (5) for locking the lower end wall (3b) in the raised position of use is also designed to lock the upper end wall (3a) in the collapsed waiting position.

5. Letter container trolley (1) according to claim 4, **characterised in that** the locking device (5) has a bolt (16) which can be moved between a locked position and a release position, preferably substantially in the horizontal direction, the locking device (5) having an actuating element (17) for the bolt (16), it being possible to transfer the actuating element (17) between a first position in which the bolt (16) is fixed in the locked position and a second position in which the bolt is fixed in the release position.

6. Letter container trolley (1) according to claim 5, **characterised in that** the actuating element (17) has a contact surface for actuating the locking device by foot.

7. Letter container trolley (1) according to either claim 5 or claim 6, **characterised in that** the actuating element (17) is arranged in the first position in a first angular position and in the second position in a second angular position with respect to the vertical.

8. Letter container trolley (1) according to any of claims 5 to 7, **characterised in that** the locking device (5) has a spring (27), it being possible for the actuating element (17) to be released, against the force of the spring (27), from being fixed by the holding element (15) in the first or second position, the spring (27) preferably having a spring clip (28) which receives the lower edge of the actuating element (17).

9. Letter container trolley (1) according to any of claims 5 to 8, **characterised in that** the actuating element (17) has a through-opening (21) for the bolt (16) to pass through, the longitudinal extent of the through-opening (21) preferably being greater than the diameter of the portion of the bolt (16) received therein.

10. Letter container trolley according to any of claims 5 to 9, **characterised in that** the locking device (5) has a holder (20) comprising at least one receiving opening (26) for a lower edge region of the actuating element (17).

11. Letter container trolley according to any of claims 5 to 10, **characterised in that** the actuating element (17) is planar.

12. Letter container trolley according to any of claims 5 to 11, **characterised in that** the locking device (5) has a longitudinal receiving portion (22) for receiving, with a substantially exact fit, a longitudinal frame element (23) of the relevant end wall (3) in the raised position of use.

13. Letter container trolley according to any of claims 1 to 12, **characterised in that** a locking brake (11) is provided for lifting two rollers (4), in particular two castors (4a, 4b), of the chassis (2) from the ground, the locking brake (11) preferably having a toggle lever.

14. Arrangement comprising at least two letter container trolleys (1) according to any of claims 1 to 13, wherein the at least two letter container trolleys (1a, 1b) are stacked one on top of the other with the end walls (3) in the collapsed waiting position.

## Revendications

1. Chariot roulant pour caisses de courrier (1) avec un châssis (2) sur lequel sont montées des roulettes (4), et avec une structure qui présente deux parois frontales (3), dans lequel les parois frontales (3) peuvent être rabattues respectivement entre une position d'utilisation relevée et une position d'attente rentrée, **caractérisé en ce que** la paroi frontale supérieure (3a) dans la position d'attente présente sur le côté extérieur au moins une échancrure (7), de préférence deux échancrures (7a, 7b), pour la réception d'au moins une roulette (4), de préférence deux roulettes (4a, 4b), d'un chariot roulant pour caisses de courrier (1) empilé dessus, de sorte qu'à l'état empilé sur le côté extérieur de la paroi frontale supérieure (3a) deux chariots roulants pour caisses de courrier (1) soient sécurisés par l'échancrure (7) contre un glissement dans la direction longitudinale et transversale.

2. Chariot roulant pour caisses de courrier (1) selon la revendication 1, **caractérisé en ce que** la paroi frontale supérieure (3a) dans la position d'attente présente au moins un renfoncement (7c) pour la sécurisation longitudinale d'au moins une roulette, de préférence deux roulettes (4c, 4d), d'un chariot roulant pour caisses de courrier (1) empilé dessus.

3. Chariot roulant pour caisses de courrier (1) selon l'une des revendications 1 ou 2, **caractérisé en ce qu'**un guidage à trou allongé (35) pour une tige d'articulation (36) est prévu entre l'une des parois frontales (3a, 3b) et le châssis (2), dans lequel de préférence la paroi frontale supérieure (3a) dans la position d'attente présente, sur le châssis de déplacement et sur des côtés opposés, respectivement un guidage à trou allongé (35) pour respectivement une tige d'articulation (36).

4. Chariot roulant pour caisses de courrier (1) selon l'une des revendications 1 à 3, **caractérisé en ce que** respectivement un dispositif de blocage (5a, 5b, 5c, 5d) soit prévu pour bloquer les parois frontales (3a, 3b) dans la position d'utilisation relevée, dans lequel le dispositif de blocage (5) est mis en place pour bloquer la paroi frontale inférieure (3b) dans la position d'utilisation relevée ainsi que pour bloquer la paroi frontale supérieure (3a) dans la position d'attente rentrée.

5. Chariot roulant pour caisses de courrier (1) selon la revendication 4, **caractérisé en ce que** le dispositif de blocage (5) présente un verrou (16) qui est coulissant entre une position verrouillée et une position de libération, de préférence essentiellement dans la direction horizontale, dans lequel le dispositif de blocage (5) présente un élément d'actionnement (17) pour le verrou (16), dans lequel l'élément d'actionnement (17) peut être transféré entre un premier positionnement fixant le verrou (16) dans la position verrouillée et un second positionnement fixant le verrou dans la position de libération.

6. Chariot roulant pour caisses de courrier (1) selon la revendication 5, **caractérisé en ce que** l'élément d'actionnement (17) présente une surface de contact pour actionner le dispositif de blocage avec le pied.

7. Chariot roulant pour caisses de courrier (1) selon l'une des revendications 5 ou 6, **caractérisé en ce que** l'élément d'actionnement (17) est agencé, par rapport à la verticale, dans le premier positionnement dans une première position angulaire et dans le second positionnement dans une seconde position angulaire.

8. Chariot roulant pour caisses de courrier (1) selon l'une des revendications 5 à 7, **caractérisé en ce que** le dispositif de blocage (5) présente un ressort (27), dans lequel l'élément d'actionnement (17) peut être libéré contre la force du ressort (27) depuis la fixation par l'élément de retenue (15) dans le premier positionnement ou le second positionnement, dans lequel le ressort (27) présente de préférence une agrafe élastique (28) logeant le bord inférieur de l'élément d'actionnement (17).

9. Chariot roulant pour caisses de courrier (1) selon l'une des revendications 5 à 8, **caractérisé en ce que** l'élément d'actionnement (17) présente une ouverture de passage (21) pour permettre le passage du verrou (16), dans lequel l'extension longitudinale de l'ouverture de passage (21) est de préférence plus grande que le diamètre de la section de verrou (16) logée à l'intérieur.

10. Chariot roulant pour caisses de courrier selon l'une des revendications 5 à 9, **caractérisé en ce que** le dispositif de blocage (5) présente une retenue (20) avec au moins une ouverture de logement (26) pour une zone de bord inférieure de l'élément d'actionnement (17).

11. Chariot roulant pour caisses de courrier selon l'une des revendications 5 à 10, **caractérisé en ce que** l'élément d'actionnement (17) est en forme de plaque.

12. Chariot roulant pour caisses de courrier selon l'une des revendications 5 à 11, **caractérisé en ce que** le dispositif de blocage (5) présente un logement longitudinal (22) pour un logement essentiellement ajusté d'un élément de cadre longitudinal (23) de la paroi frontale (3) respective dans la position d'utilisation relevée.

13. Chariot roulant pour caisses de courrier selon l'une des revendications 1 à 12, **caractérisé en ce qu'**un frein de stationnement (11) est prévu pour soulever deux roulettes (4), en particulier deux roulettes pivotantes (4a, 4b), du châssis (2) depuis un support, dans lequel le frein de stationnement (11) présente de préférence un levier coudé.

14. Agencement avec au moins deux chariots roulants pour caisses de courrier (1) selon l'une des revendications 1 à 13, dans lequel les au moins deux chariots roulants pour caisses de courrier (1a, 1b) sont empilés les uns sur les autres dans la position d'attente rentrée des parois frontales (3).
